**Europäisches Patentamt**

**European Patent Office**

**Office européen des brevets**

(19)

(11) Veröffentlichungsnummer : **0 134 937**
**B1**

(12)

# EUROPÄISCHE PATENTSCHRIFT

(45) Veröffentlichungstag der Patentschrift :
29.07.87

(51) Int. Cl.⁴ : **C 08 L 77/00**

(21) Anmeldenummer : 84107380.2

(22) Anmeldetag : 27.06.84

(54) Thermoplastische Polyamid-Formmassen mit hoher Zähigkeit.

(30) Priorität : 09.07.83 DE 3324907
                27.10.83 DE 3339000

(43) Veröffentlichungstag der Anmeldung :
27.03.85 Patentblatt 85/13

(45) Bekanntmachung des Hinweises auf die Patenterteilung : 29.07.87 Patentblatt 87/31

(84) Benannte Vertragsstaaten :
DE FR GB IT NL

(56) Entgegenhaltungen :
EP-A- 0 001 245
EP-A- 0 014 879
EP-A- 0 027 198
EP-A- 0 043 491
EP-A- 0 058 331
EP-A- 0 083 446
Die Akte enthält technische Angaben, die nach dem
Eingang der Anmeldung eingereicht wurden und die
nicht in dieser Patentschrift enthalten sind.

(73) Patentinhaber : **BAYER AG**
**Konzernverwaltung RP Patentabteilung**
**D-5090 Leverkusen 1 Bayerwerk (DE)**

(72) Erfinder : **Trabert, Ludwig, Dr.**
**Leydelstrasse 67**
**D-4150 Krefeld (DE)**
Erfinder : **Binsack, Rudolf, Dr.**
**Bethelstrasse 4a**
**D-4150 Krefeld (DE)**
Erfinder : **Lindner, Christian, Dr.**
**Riehler Strasse 200**
**D-5000 Koeln 60 (DE)**
Erfinder : **Merten, Josef, Dr.**
**Kruensend 30**
**D-4052 Korschenbroich 1 (DE)**
Erfinder : **Fahnler, Friedrich, Ing.**
**Wimmersweg 60**
**D-4150 Krefeld (DE)**
Erfinder : **Morbitzer, Leo, Dr.**
**Rungestrasse 50**
**D-5000 Köln 80 (DE)**

EP 0 134 937 B1

**0 134 937**

**Beschreibung**

Die Erfindung betrifft thermoplastische Formmassen mit verbesserter Schlagzähigkeit bei tiefen Temperaturen aus Polyamiden und gepfropften, wenigstens partiell vernetzten Dienkautschuken und-/oder Acrylatkautschuken mit bimodaler Verteilung der Kautschukteilchengröße.

Formkörper aus Polyamiden haben sich aufgrund ihrer mechanischen Festigkeitswerte wie Steifigkeit, Abriebfestigkeit, Härte, dynamischer und thermischer Belastbarkeit und ihrer leichten Herstellbarkeit bewährt. Ein Nachteil ist ihre unbefriedigende Zähigkeit.

Es gibt eine Reihe von Vorschlägen, die Zähigkeit von Polyamidformmassen durch Zumischen anderer Polymerer zu verbessern. So wurden Polyolefine (DE-OS 1 694 802, 2 038 317, 3 022 295) und Ethylenionomere (EP-A 34 704, 69 200, 72 480) vorgeschlagen. Es wurden darüber hinaus gepfropfte Acrylatkautschuke und gepfropfte Dienkautschuke vorgeschlagen, die eine ganz spezifische Pfropfstruktur aufweisen bzw. die nach bestimmten Verfahren hergestellt worden sind (EP-A 3 126 und DE-OS 2 758 615, 3 101 771, 3 120 803).

Die vorgeschlagenen Formmassen weisen im allgemeinen eine verbesserte Zähigkeit auf. Es hat sich aber gezeigt, daß solche Formmassen für wichtige Anwendungen nicht immer voll befriedigen, beispielsweise im Kfz-Bereich, wobei Zusammenstößen große Deformationskräfte wirksam werden können, z. B. an der Karosserie, den Stoßfängern und Spoilern, dem Lenkrad und der Lenksäule. Es werden dafür besondere Anforderungen gestellt, auch für tiefe Temperaturen bis — 20 °C oder sogar — 30 °C.

Gegenstand der Erfindung sind daher thermoplastische Formmassen aus :

A. 65-97, vorzugsweise 70-95, insbesondere 75-90, Gew.-% (bezogen auf A + B) Polyamid und
B. 3-35, vorzugsweise 5-30, insbesondere 10-25, Gew.-% (bezogen auf A + B) Pfropfprodukt

von wenigstens einem Vinylmonomeren aus der Reihe Styrol, Acrylnitril, Methylmethacrylat auf teilchenförmige, wenigstens partiell vernetzte Dienkautschuke und/oder Alkylacrylatkautschuke mit mittlere Kautschukteilchendurchmessern von 0,05 bis 1 μm und mit einem Kautschukgehalt der Pfropfprodukte von 60 bis 85, vorzugsweise 65 bis 80, insbesondere 70 bis 75 Gew.-%, dadurch gekennzeichnet, daß dem Pfropfprodukt B folgende Kautschuke zugrundeliegen :

a) 20 bis 80, vorzugsweise 30 bis 70, insbesondere 35 bis 60 Gew.-% (bezogen auf die Summe a + b) eines Kautschuklatex mit einem Teilchendurchmesser $d_{50}$ von 0,05 bis 0,19, vorzugsweise 0,08 bis 0,15 μm, und
b) 80 bis 20, vorzugsweise 70 bis 30, insbesondere 65 bis 40 Gew.-% (bezogen auf die Summe a + b) eines Kautschuklatex mit einem Teilchendurchmesser $d_{50}$ von 0,2 bis 1, vorzugsweise 0,25 bis 0,8, insbesondere 0,3 bis 0,6 μm, mit der Maßgrabe, daß

1) $d_{50}$ (b) um den Faktor 1,5 bis 8, vorzugsweise 2,7 bis 5, insbesondere 3 bis 4,5, größer ist als $d_{50}$ (a),
2) der Quotient $Q = (d_{90} — d_{10})/d_{50}$ der einzelnen Kautschuke jeweils höchstens 2, vorzugsweise höchstens 1,8, insbesondere höchstens 0,8, und
3) die Differenz $d_{10}$ (b) — $d_{90}$ (a) 0,01 bis — 0,10, vorzugsweise 0 bis — 0,08, insbesondere 0 bis — 0,05, betragen.

Die Gewichtsangaben der Kautschuklatices sind jeweils auf Feststoff bezogen.

Dabei kann man zur Herstellung des Pfropfproduktes B entweder einen Kautschuklatex entsprechend a) und einen Kautschuklatex entsprechend b) in dem angegebenen Mengenverhältnis mischen und die Vinylmonomeren auf dieses Gemisch pfropfpolymerisieren oder die Vinylmonomeren auf einen Kautschuklatex entsprechend a) und auf einen Kautschuklatex entsprechend b) getrennt voneinander pfropfpolymerisieren und die beiden Pfropfprodukte (entweder als Latices mit nachfolgender gemeinsamer Fällung oder als bereits vorhandene Feststoffe) mischen. Bevorzugt ist die zweite Methode.

Diese Formmassen sind für die oben genannten Anwendungen besser geeignet als bekannte, haben aber dennoch keine nennenswerte Nachteile.

Es ist wesentlich, wenigstens partiell vernetzte Dienkautschuke und/oder Acrylatkautschuke mit Kautschukteilchendurchmessern $d_{50}$ von 0,05 bis 1 μm zu verwenden, die eine « bimodale » Teilchendurchmesserverteilung haben.

Das bedeutet, durch Kombination bestimmter grobteiliger Kautschuke mit bestimmten feinteiligen Kautschuken in Form von Pfropfpolymerisaten B werden erfindungsgemäße Formmassen wesentlich verbesserter Eigenschaften erhalten ; dazu muß die Kautschukteilchengrößenverteilung, die zur Herstellung von Komponente B eingesetzt wird, bimodal sein und soll zwei deutliche Maxima aufweisen. Um den mit diesen spezifischen Teilchengrößenverteilungen zusammenhängenden Effekt jedoch zu beobachten, ist es erforderlich, von Kautschuken auszugehen, deren Teilchengrößenverteilung bestimmten Parametern gehorchen : Dazu gehören eine kritische Breite der Verteilungskurve (ausgedrückt durch den

2

Quotienten Q), ein kritischer Abstand der Verteilungskurvenmaxima (ausgedrückt durch die Differenz $d_{50}$ (b) — $d_{50}$ (a)) sowie eine kritische Überlappung der Verteilungskurven (ausgedrückt durch die Differenz $d_{10}$ (b) — $d_{90}$ (a)).

Die erfindungsgemäßen Formmassen zeichnen sich dadurch aus, daß sie, abhängig vom Modifikatorgehalt, Zähbruchverhalten bis — 20 °C, z. T. bis — 30 °C beibehalten bzw. daß ein Rückgang der Zähigkeitseigenschaften erst unterhalb dieser Temperatur eintritt.

Diese erfindungsgemäße Wirkung ist umso überraschender, als feinteiliger Kautschuk die Schlagzähigkeit von thermoplastischen Polyamiden nur mäßig verbessert und grobteilige Kautschuke zu einem kontinuierlichen Abfall der Zähigkeit mit absinkender Temperatur führen.

Die Wirkung ist nicht vorhersehbar, weil die bekannten ABS-Kunststoffe, die grobteilige und feinteilige Pfropfkautschuke nebeneinander enthalten (vgl. z. B. DE-AS 2 420 358), mit sinkender Temperatur einen kontinuierlichen Zähigkeitsabfall aufweisen und dies eigentlich auch hier zu erwarten ist.

Die Pfropfprodukte B umfassen Pfropfpolymerisate mit kautschukelastischen Eigenschaften, die durch Aufpfropfen von Vinylmonomeren aus der Reihe Styrol, Acrylnitril, Methylmethacrylat auf teilchenförmige, wenigstens partiell vernetzte Dienkautschuke und/oder Alkylacrylatkautschuke erhalten werden.

Bevorzugte Pfropfmonomere sind Methylmethacrylat sowie Mischungen aus Styrol und Methylmethacrylat bzw. Styrol und Acrylnitril.

Dienkautschuke sind teilchenförmige, vernetzte Homo- und/oder Copolymerisate aus konjugierten $C_4$-$C_6$-Dienen. Bevorzugtes Dien ist Butadien-1,3. Die Diencopolymerisate können neben den Dienresten bis zu 30 Gew.-%, bezogen auf das Copolymerisat, Reste anderer ethylenisch ungesättigter Monomerer, wie z. B. Styrol, Acrylnitril, Ester der Acryl- oder Methacrylsäure mit einwertigen $C_1$-$C_4$-Alkoholen, wie z. B. Methylacrylat, Ethylacrylat, Methylmethacrylat, Ethylmethacrylat, enthalten.

Die Herstellung der Dienkautschuk-Pfropfgrundlage und der Pfropfpolymerisate ist bekannt und wird z. B. in « Methoden der Organischen Chemie » (Houben-Weyl), Bd. 14/1, Georg Thieme Verlag, Stuttgart 1961, S. 393-406, sowie in Ullmanns Encyclopädie der technischen Chemie, 4. Auflage, Bd. 19, Verlag Chemie 1981, S. 279-284 beschrieben.

Alkylacrylatkautschuke sind teilchenförmige vernetzte Alkylacrylatpolymere, die durch Polymerisation von Estern aus Acrylsäure und einwertigen Alkoholen mit 1-8 C-Atomen erhalten werden. Die Polymerisate können auch Copolymerisate der Acrylsäureester mit bis zu 40 Gew.-% anderer Vinylmonomerer, wie Styrol, Acrylnitril, Methylmethacrylat, Vinylester, Vinylether, sein.

Die Alkylacrylatkautschuke sind vernetzt z. B. durch Einpolymerisieren polyfunktioneller, vernetzend wirkender, copolymerisierbarer olefinisch ungesättigter Comonomerer. Zur Vernetzung können Monomere mit mehr als einer Polymerisierbaren Doppelbindung copolymerisiert werden. Bevorzugte Beispiele für vernetzende Monomere sind Ester ungesättigter Monocarbonsäuren mit 3-8 C-Atomen und ungesättigter einwertiger Alkohole mit 3-12 C-Atomen oder gesättigter Polyole mit 2-4 OH-Gruppen und 2-20 C-Atomen, wie z. B. Ethylenglykoldimethacrylat, Allylmethacrylat ; mehrfach ungesättigte heterocyclische Verbindungen, wie z. B. Trivinyl- und Triallylcyanurat und -isocyanurat, Trivinylbenzole ; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen.

Besonders bevorzugte vernetzende Monomere sind die cyclischen Monomeren Triallylcyanurat, Triallylisocyanurat, Trivinylcyanurat, Tris-acryloylhexahydro-s-triazin, Triallylbenzole.

Die Menge der vernetzenden Monomeren beträgt vorzugsweise 0,02-5, insbesondere 0,05-2 Gew.-%, bezogen auf die Kautschuk-Pfropfgrundlage.

Bei cyclischen vernetzenden Monomeren mit mindestens drei ethylenisch ungesättigten Gruppen ist es vorteilhaft, nicht mehr als 1 Gew.-%, bezogen auf die kautschuk-Pfropfgrundlage, zu verwenden.

Alkylacrylatkautschuke können auch mehrschalige Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern und aufpolymerisiertes Poly(meth)acrylat als Hülle enthalten.

Der Anteil der Polydienkerns in solchen mehrschaligen Kautschuk-Pfropfgrundlagen kann 0,1-80, bevorzugt 10-50 Gew.-%, betragen. Schale(n) und Kern können unabhängig voneinander teilvernetzt oder hochvernetzt sein.

Die Dienkautschuke und die Alkylacrylatkautschuke liegen als Teilchen eines mittleren Durchmessers $d_{50}$ im Bereich von 0,05-1 µm vor und sind wenigstens partiell vernetzt. Sie besitzen Gelgehalte $\geq 50$, vorzugsweise $\geq 80$, insbesondere $\geq 90$ Gew.-%.

Der mittlere Teilchendurchmesser d kann mittels Ultrazentrifugen-Messungen (W. Scholtan, H. Lange, Kolloid. Z. und Z. Polymere 250 (1972), 782-796) oder mittels Elektronenmikroskopie und anschließende Teilchenauszählung (G. Kömpf, H. Schuster, Angew. Makromolekulare Chemie 14, (1970), 111-129) bestimmt werden.

Werden die Teilchenverteilungen mittels Elektronenmikroskopie und anschließende Teilchenauszählung ermittelt, so fallen dabei Zahlenmittel (und nicht Gewichtsmittel) an. So ermittelte Zahlenmittel müssen dann allerdings in Gewichtsmittel umgerechnet werden, damit sie mit den hier angegebenen Werten $d_{10}$, $d_{50}$, $d_{90}$ vergleichbar sind. Diese Umrechnung gelingt z. B. nach W. Scholtan

**0 134 937**

und H. Lange und liefert für beide Methoden gut übereinstimmende Werte. Weiterhin sei auf DIN 53206 hingewiesen, wo Umrechnungen von Teilchengrößenverteilungen definiert sind.

Bei der in dieser Anmeldung angegebenen mittleren Teilchengrößen handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere *250* (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen gleichen oder kleineren Durchmesser haben als der Durchmesser, der dem $d_{50}$-Wert entspricht. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Die $d_{10}$- bzw. $d_{90}$-Werte der integralen Massenverteilung sind dabei entsprechend dem $d_{50}$-Werte definiert mit dem Unterschied, daß sie auf 10 und 90 Gew.-% der Teilchen bezogen sind. Der Quotient

$$d_{90}-d_{10}/d_{50} = Q$$

stellt ein Maß für die Verteilungsbreite der Teilchengröße dar.

Die Differenz $d_{10}$ (b) — $d_{90}$ (a) stellt dann ein Maß für die Überlappung der Kurven dar : Ist die Differenz positiv, so liegt keine oder nur eine geringfügige Kurvenüberlappung vor ; ist die Differenz negativ, so ist eine Kurvenüberlappung vorhanden, deren Ausmaß durch die Größe des negativen Wertes beschrieben wird.

Wie schon gesagt, kann man auch die Zahlenmittelverteilung der Kautschukteilchen ermitteln und anschließend in Gewichtmittel umrechnen. Die mikroskopische Auszählmethode gemäß G. Kämpf et al. ist um so genauer, je mehr Teilchen ausgezählt werden ; normalerweise sollten wenigstens $10^4$ Teilchen vermesser werden, die dann nach statistischer Auswertung eine Teilchengrößenzahlenmittelverteil ungskurve liefern. Man kann dabei beispielsweise die Teilchengrößenklassen gerade so groß wählen, daß 90 % der Teilchen auf nicht weniger, aber auch nicht mehr als 20 Klassen verteilt sind.

Dabei bleibt nachzutragen, daß die Kautschukteilchen in den Formmassen in gepfropftem Zustand vorliegen ; man könnte somit vermuten, daß durch die Pfropfung die Kautschukteilchengröße verändert wurde, verglichen mit den in den Kautschuklatices (zur Herstellung von B) vorliegenden Kautschukteilchen. Es hat sich allerdings gezeigt, daß die Pfropfung sowie die Pfropfhüllenmenge gemäß den hier beschriebenen Kennzeichen die Kautschukteilchengröße praktisch kaum beeinflußt, so daß an Formmassen ermittelte Verteilungskurven mit an Latex ermittelten Verteilungskurven verglichen werden können.

Der Gelgehalt der Dienkautschuke wird bei 25 °C in Toluol, der Gelgehalt der Alkylacrylatkautschuke bei 25 °C in Dimethylformamid bestimmt (M. Hoffmann, H. Krömer, R. Kuhn, Polymeranalytik I und II, Georg Thieme Verlag Stuttgart 1977).

Bevorzugte gepfropfte Alkylacrylat-Kautschuke sind solche, die

a. mit cyclischen trifunktionellen Comonomeren wie Triallylcyanurat oder Triallylisocyanurat vernetzt sind (beschrieben in DE-OS 3 039 114),
b. einen Polybutadienkern enthalten (beschrieben in DE-OS 3 039 115),
c. hergestellt wurden in « Abwesenheit von Suspendiermittel » (beschrieben in DE-OS 3 117 052).

Welcher Kautschukgehalt am günstigsten zur Herstellung der erfindungsgemäßen Formmassen ist, hängt u. a. von dem jeweiligen Kautschukteilchendurchmesser und von der Pfropfdichte ab.

Kautschukte mit den erfindungsgemäßen Teilchendurchmessern können durch Emulsionspolymerisation geeigneter Monomeren erhalten werden. In den dazu bekannten Emulsionspolymerisationsverfahren lassen sich die Latexteilchendurchmesser durch Wahl der Verfahrensbedingungen einstellen, z. B. durch Art und Konzentration des Emulgators, Teilchen-Agglomerisation, Elektrolyte, Temperatur, Monomer/Polymer-Konzentration.

Bei der Herstellung der Pfropfprodukte B durch Pfropfcopolymerisation, die üblicherweise in Gegenwart von Radikalstartern, z. B. wasserlöslichen Initiatoren, Emulgatoren oder Komplexbildnern, Pfropfaktivatoren sowie Reglern durchgeführt wird, bilden sich im allgemeinen neben dem eigentlichen Pfropfcopolymerisat in bestimmtem Ausmaß auch freie Polymerisate bzw. Copolymerisate der die Pfropfhülle bildenden Pfropfmonomeren. Die Menge dieses ungepfropften Polymerisates kann durch den Pfropfgrad bzw. die Pfropfausbeute charakterisiert werden. Diese hängt unter anderem von den Polymerisationsbedingungen, der Zusammensetzung der Kautschukpfropfgrundlage, der Größe der zu pfropfenden Teilchen und der Menge an gepfropfter Kautschukpfropfgrundlage ab.

Pfropfprodukt B im Sinne der Erfindung ist deshalb das durch Polymerisation von Vinylmonomeren in Gegenwart der kautschuklatices erhaltene Produkt, genau genommen also im allgemeinen ein Gemisch aus Pfropfcopolymerisat und freiem (Co)polymerisat der Pfropfmonomeren. ·

Die erfindungsgemäßen Formmassen weisen optimale Eigenschaften auf, wenn die Menge an freiem

4

(Co)polymerisat der Pfropfmonomeren bestimmte Grenzen nicht übersteigt. Diese obere Grenze liegt im allgemeinen bei 15 Gew.-%, vorzugsweise bei 10 Gew.-%, insbesondere bei 7 Gew.-%, bezogen auf die Formmasse aus A + B.

Darüber hinaus soll der Staudinger-Index [η] dieser freien (Co)polymerisate ≤ 0,6 dl/g, vorzugsweise ≤ 0,4 dl/g betragen, gemessen in Dimethylformamid bei 25 °C.

Zur Erzielung bestimmter technologischer Eigenschaften kann es vorteilhaft sein, die Polymerisate der Pfropfmonomeren auch getrennt herzustellen und den Formmassen während der Herstellung zuzumischen. Man kann aber auch so verfahren, daß separat hergestelltes Polymerisat der Pfropfmonomeren während der Pfropfcopolymerisation anwesend ist. Es ist auch möglich, gegebenenfalls überschüssiges Polymerisat der Pfropfmonomeren aus den Pfropfprodukten B abzutrennen. Welcher Weg beschritten wird, hängt vom gewählten Polymerisationsverfahren, von der Art der jeweiligen Kautschukpfropfgrundlage, von Art und Menge der Pfropfmonomeren sowie von den gewünschten technologischen Eigenschaften der Formmassen ab.

Der Fachmann kann die Pfropfpolymerisation der Pfropfmonomeren auf die Kautschukteilchen so durchführen und steuern, daß die erfindungsgemäß erforderlichen Pfropfprodukt-Zusammensetzungen gebildet und gleichzeitig die gegebenenfalls erforderlichen Pfropfmonomerpolymerisat-Gehalte erzeugt werden.

Solche speziellen Polymerisate, bestehend aus Pfropfpolymerisaten in Mischung mit geeigneten Pfropfmonomerpolymerisaten, können dann direkt zur Herstellung der Formmassen eingesetzt werden. In solchen Fällen sind natürlich die Pfropfastpolymere chemisch weitgehend identisch mit den Pfropfmonomerpolymerisaten.

Die Erfindung schließt aber nicht aus, daß die Pfropfmonomerpolymerisate von chemisch anderer Natur sind als die zur Pfropfung eingesetzten Pfropfmonomeren. Beispielsweise können als Pfropfmonomerpolymerisat ein Polymethylmethacrylat und gleichzeitig als Pfropfprodukt B ein Styrol/Acrylnitrilgepfropfter Kautschuk verwendet werden. Solche Kombinationen können gegebenenfalls mit besonderen anwendungstechnischen Vorteilen verbunden sein.

Die « bimodalen » Pfropfprodukte B lassen sich nach verschiedenen Verfahren herstellen. So kann man eine Dispersion feinteiliger kautschukteilchen (entsprechend a) mit Monomeren bepfropfen, diese Pfropfpolymeremulsion dann mit einer getrennt erzeugten Pfropfpolymerdispersion grobteiliger Kautschukteilchen abmischen und anschließend diese Mischung aufarbeiten.

Man kann auch die Kautschukteilchendispersionen (Latices) mischen und auf dieses Gemisch die Pfropfmonomeren, insbesondere in wäßriger Emulsion mittels Radikale bildender Systeme, pfropfpolymerisieren und dann in bekannter Weise aufarbeiten.

Man kann aber auch feinteilige Pfropfprodukte und grobteilige Pfropfprodukte getrennt herstellen, abmischen und anschließend diese Mischung mit den thermoplastischen Polyamiden zur Herstellung der erfindungsgemäßen Formmassen abmischen.

Nach dem bevorzugten Verfahren werden die Mischungen aus Kautschukteilchendispersionen der erfindungsgemäßen bimodalen Teilchenverteilung mit Pfropfmonomeren bepfropft, insbesondere in wäßriger Emulsion mittels Radikale bildender Systeme, und dann in der bekannten Weise aufgearbeitet.

Man kann aber auch feinteilige Pfropfprodukte und grobteilige Pfropfprodukte getrennt herstellen und in Mengen entsprechend der erfindungsgemäßen Zusammensetzung a/b mit den thermoplastischen Polyamiden zur Herstellung der erfindungsgemäßen Formmassen abmischen.

Bei den Verfahren der getrennten Pfropfung und gemeinsamen Aufarbeitung des Pfropfproduktes einerseits und bei der getrennten Herstellung von feinteiligem und grobteiligem Pfropfprodukt andererseits ist es auch möglich, Pfropfprodukte mit unterschiedlichem Aufbau der feinteiligen und der grobteiligen Komponente zu verwenden.

Diese Verfahren sind somit bevorzugt.

Als Polyamide A eignen sich alle thermoplastischen Polyamide, vorzugsweise teilkristalline Polyamide. So können als teilkristalline Polyamide für die erfindungsgemäßen Formmassen Polyamid-6, Polyamid-66 und Copolymere aus diesen beiden Komponenten eingesetzt werden. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylendiamin und/oder Hexamethylendiamin und/oder 2,2,4-Trimethylenhexamethylendiamin und/oder 2,4,4-Trimethylhexamethylendiamin und/oder Isophorondiamin besteht und deren Zusammensetzung aus dem Stand der Technik bekannt ist.

Außerdem sind Polyamide zu nennen, die ganz oder teilweise aus Lactamen mit 6-12 C-Atomen, gegebenenfalls unter Mitverwendung einer oder mehrerer der oben genannten Ausgangskomponenten hergestellt werden.

Besonders bevorzugte teilkristalline Polyamide sind Polyamid-6 und Polyamid-66.

Die Polyamide sollen vorzugsweise eine relative Viskosität (gemessen an einer 1 gew.-%igen Lösung in m-Kresol bei 25 °C) von 2,0 bis 5,0, vorzugsweise von 2,5 bis 4,5 aufweisen.

Die erfindungsgemäßen Formmassen können übliche Additive, wie Gleit- und Entformungsmittel, Nucleiermittel, Stabilisatoren, Füll- und Verstärkungsstoffe, Flammschutzmittel sowie Farbstoffe enthalten.

5

Die gefüllten bzw. verstärkten Formmassen können bis zu 60 Gew.-%, bezogen auf gefüllte bzw. verstärkte Formmasse, Füll und/oder Verstärkungsstoffe, enthalten.

Bevorzugte Verstärkungsstoffe sind Glasfasern. Bevorzugte Füllstoffe, die auch verstärkend wirken können, sind Glaskugeln, Glimmer, Silikate, Feldspat, Quarz, Talkum, Titandioxid, Wollastonit.

Die mit Flammschutzmitteln ausgerüsteten Formmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z. B. cyclische Chlorverbindungen, Melamin und dessen Salze, wie Melamincyanurat oder Melaminsulfat und roter Phosphor.

Die Herstellung der Formmassen kann in den üblichen Mischaggregaten, wie Walzen, Knetern, Ein- und Mehrwellenextrudern, erfolgen.

Wenn auch in den meisten Fällen sämtliche Harzkomponenten zweckmäßigerweise in einem Schritt gemischt werden, kann es manchmal auch empfehlenswert sein, zuerst eine oder gar zwei Komponenten wegzulassen und erst zu einem späteren Zeitpunkt zuzumischen.

So können die erfindungsgemäßen Formmassen auf den genannten Mischaggregaten hergestellt werden, indem die beiden Komponenten A und B gemeinsam aufgeschmolzen und homogenisiert werden oder indem das Pfropfprodukt B in die Schmelze des Polyamids A eingearbeitet wird.

Die Temperatur bei der Herstellung der Mischungen sollte mindestens 10 °C und zweckmäßig höchstens 80 °C oberhalb des Schmelzpunktes des Polyamids liegen.

Die erfindungsgemäßen Formmassen zeichnen sich durch eine verbesserte Zähigkeit aus. Ein herausragendes Merkmal ist die Verbesserung der Zähigkeit bei tiefen Temperaturen.

Entsprechend dem Eigenschaftsprofil eignen sich die erfindungsgemäßen Formmassen überall im Spritzguß- und Extrusionssektor dort, wo Formteile hohen Stoßbelastungen ausgesetzt sind, z. B. im Kfz-Bereich für Stoßfänger, Spoiler, Rammleisten, Karosserieteile, Lenkräder, Lenkradsäulen.

Die nachfolgenden Beispiele erläutern die Erfindung :

Beispiele

I. Polyamid-6 mit einer relativen Viskosität (gemessen an einer 1 Gew.-%igen Lösung in m-Kresol bei 25 °C) von 3,5.

II. Polyamid-66 mit einer relativen Viskosität von 3,0, gemessen wie I.

III. Gepfropfter Polybutadienkautschuk

III.1. Herstellung von Polybutadienlatices

III.1.1. In einem Reaktor wird unter Rühren folgende Emulsion bei 65 °C bis zum praktisch vollständigen Monomerumsatz innerhalb von ca. 22 Stunden polymerisiert :

100,0 Gew.-Teile Butadien,
1,8 Gew.-Teile Na-Salz der disproportionierten Abietinsäure,
0,257 Gew.-Teile Natriumhydroxid,
0,3 Gew.-Teile n-Dodecylmercaptan,
1,029 Gew.-Teile Na-ethylendiamintetraacetat,
0,023 Gew.-Teile Kaliumpersulfat und
176 Gew.-Teile Wasser.

Es wird ein Latex erhalten, der Butadienpolymerisatteilchen eines mittleren Durchmessers ($d_{50}$) von 0,1 μm in einer Konzentration von ca. 35-36 Gew.-% enthält. Die Polybutadienteilchen besitzen Gelgehalte von 90-95 Gew.-% (gemessen in Toluol bei 23 °C).

III.1.2 Nach Vorschriften III.1.1 wird bei 60-68 °C innerhalb von ca. 110 Std. folgende Emulsion polymerisiert :

100,0 Gew.-Teile Butadien,
70,0 Gew.-Teile Wasser,
1,146 Gew.-Teile Na-Salz der disproportionierten Abietinsäure,
0,055 Gew.-Teile Na-ethylendiamintetraacetat,
0,137 Gew.-Teile Natriumhydroxid,
0,028 Gew.-Teile Natriumhydrogencarbonat und
0,282 Gew.-Teile Kaliumpersulfat.

Es wird ein Latex erhalten, der Polybutadienteilchen eines mittleren Durchmessers ($d_{50}$) von 0,4 μm in einer Konzentration von ca. 58 Gew.-% enthält. Die Polybutadienteilchen besitzen Gelgehalte von 90-91 Gew.-% (gemessen in Toluol bei 23 °C).

6

III.2. Herstellung von Pfropfprodukten

In einem Reaktor werden unter Rühren bei 65 °C a Gew.-Teile Polydienlatex und b Gew.-Teile Wasser vorgelegt. Nach Initiierung mit c Gew.-Teilen Kaliumpersulfat werden 100 Gew.-Teile Methylmethacrylat und separat eine Mischung aus d Gew.-Teilen Wasser, e Gew.-Teilen Natriumsalz der disproportionierten Abietinsäure und f Gew.-Teilen 1n-Natronlauge innerhalb von mehreren Stunden zudosiert. Anschließen läßt man bis zu einem Endumsatz von 98 Gew.-% bei Temperaturen von 65 bis 75 °C auspolymerisieren. Die Mengenangaben zu diesen Pfropfpolymerisationen sind in folgender Tabelle wiedergegeben :

Tabelle 1 : Herstellung der Pfropfprodukte

| Typ | a Latex III 1.1 | Latex III 1.2 | b | c | d | e | f |
|---|---|---|---|---|---|---|---|
| A | - | 690 | 100 | 0,50 | 100 | 4,0 | 3,0 |
| B | 228 | 551 | 100 | 0,52 | 100 | 4,2 | 3,1 |
| C | - | 517 | 150 | 0,58 | 100 | 4,8 | 3,5 |
| D | 171 | 414 | 100 | 0,52 | 100 | 4,8 | 3,5 |
| E | - | 402 | 233 | 0,67 | 100 | 5 | 3,66 |
| F | 666 | - | 134 | 0,666 | 100 | 6,25 | 4,37 |
| G | 133 | 322 | 190 | 0,66 | 100 | 5,1 | 3,8 |
| H | 200 | 281 | 170 | 0,66 | 100 | 5,3 | 3,9 |
| I | 266 | 241 | 135 | 0,66 | 100 | 5,4 | 3,9 |
| J | 333 | 201 | 100 | 0,66 | 100 | 5,5 | 4,0 |
| K | 400 | 161 | 80 | 0,66 | 100 | 5,6 | 4,1 |
| L | 533 | 81 | 20 | 0,66 | 100 | 5,6 | 4,5 |
| M | 333 | 201 | 80 | 0,50 | 100 | 4,0 | 3,5 |

Für die oben angeführten Pfropfprodukte sowie deren Kautschukgrundlagen gelten folgende Zusammenhänge (wenn es sich um Kautschukmischungen handelt) :

$$d_{50} (b)/d_{50} (a) = 4 ; \qquad d_{10} (b) - d_{90} (a) = -0,07$$

(Siehe Tabelle 2 Seite 8 f.)

IV. Gepfropfter Polyacrylatkautschuk

IV.1 Feinteiliger Acrylatkautschuk

In einem Reaktor werden vorgelegt :
1 030 Gew.-Teile Wasser und
5 Gew.-Teile Natrium-Salz von $C_{14}$-$C_{16}$-Alkylsulfonsäuren.
Bei 70 °C werden 80 Gew.-Teile der Lösung 1 (s. u.) eingespeist. Anschließend initiiert man durch Zugabe von 5 Gew.-Teilen Kaliumperoxidisulfat in 100 Gew.-Teilen Wasser. Danach werden folgende Lösungen dosiert :

Lösung 1 : 995 Gew.-Teile n-Butylacrylat und 5 Gew.-Teile Triallylcyanurat (80 Gew.-Teile dieser Lösung wurden bereits in die Vorlage gegeben, der Rest der Lösung wird nach Initiierung dosiert !)
Lösung 2 : 20 Gew.-Teile Natrium-Salze von $C_{14}$-$C_{18}$-Alkylsulfonsäuren und 700 Gew.-Teile Wasser.

Tabelle 2 : Zusammensetzung der Pfropfprodukte

| Typ | Polybutadien-Pfropfgrundlage | | Pfropfmonomer | ungepfropftes |
| | III.1.1 Gew.-%[2] | III.1.2 Gew.-%[2] | Methylmethacrylat Gew.-%[2] | MMA-Harz [1] Gew.-Teile in 100 Gew.-Teilen Pfropfpolymerisat |
|---|---|---|---|---|
| A | – | 80 | 20 | 9 |
| B | 16 | 64 | 20 | 8 |
| C | – | 75 | 25 | 11 |
| D | 15 | 60 | 25 | 10 |
| E | – | 70 | 30 | 15 |
| F | 70 | – | 30 | 13 |
| G | 14 | 56 | 30 | 15 |
| H | 21 | 49 | 30 | 15 |
| I | 28 | 42 | 30 | 15 |
| J | 35 | 35 | 30 | 15 |
| K | 42 | 28 | 30 | 15 |
| L | 56 | 14 | 30 | 15 |
| M | 39 | 39 | 22 | ./. [3] |

1) $[\eta]_{DMF}$ = 0,18-0,31 dl/g, gemessen bei 25 °C

2) Bruttozusammensetzung des Pfropfproduktes ohne Berücksichtigung des vorhandenen ungepfropften Harzes

3) Das Pfropfprodukt M enthält kein freies MMA-Harz (freies MMA-Harz im Pfropfprodukt wurde durch Extraktion mit Methylenchlorid entfernt).

Nach Zudosierung der Lösungen 1) und 2) in 5 Stunden bei 70 °C wird 4 Stunden bei 70 °C nachpolymerisiert. Es entsteht ein Latex mit einem Feststoff-Gehalt von 35 Gew.-%. Die Latex-Teilchengröße beträgt 0,09 $\mu$m (Latex IV.1)

IV.2 Grobteiliger Acrylatkautschuk

Gearbeitet wird mit folgenden Lösungen :

Vorlage 1 : 12,4 Gew.-Teile Latex IV 1 und 313 Gew.-Teile Wasser
Vorlage 2 : 0,82 Gew.-Teile Kaliumperoxidisulfat und 20 Gew.-Teile Wasser
Zulauf 1 : 629 Gew.-Teile n-Butylacrylat und 1 Gew.-Teil Triallylcyanurat
Zulauf 2 : 700 Gew.-Teile Natrium-Salze von $C_{14}$-$C_{16}$-Alkylsulfonsäuren.

Bei 65-68 °C wird Vorlage 1 aufgeheizt, dann speist man 24 Gew.-Teile von Zulauf 1 ein. Nach Initiierung mit Vorlage 2 wird der Rest von Zulauf 1 und Zulauf 2 innerhalb von 5 Stunden zudosiert. Anschließend rührt man 4 Stunden nach.

Der Latex besitzt einen Feststoffgehalt von 37 Gew.-%. Die Latex-Teilchengröße beträgt 0,5 $\mu$m. Das Polymerisat besitzt einen Gelgehalt von 93 Gew.-% und einen Quellungsindex [1]) von 8, gemessen in DMF bei 23 °C (Latex IV.2).

IV.3 Herstellung der Pfropfprodukte aus Acrylatkautschuk und Methylmethacrylat

Allgemeine Vorschrift.
In einem Reaktor wird mit folgenden Lösungen bzw. Latices polymerisiert.

| | | |
|---|---|---|
| Vorlage 1: | Latex IV.1 und/oder Latex IV.2 | A Gew.-Teile |
| Vorlage 2 | Kaliumperoxidisulfat: | 2 Gew.-Teile |
| | Wasser | 120 Gew.-Teile |
| Zulauf 1: | Methylmethacrylat: | 304 Gew.-Teile |
| Zulauf 2: | Natriumsalze von $C_{14}$-$C_{16}$-Alkylsulfonsäuren: | 6 Gew.-Teile |
| | Wasser: | 396 Gew.-Teile |

Bei 65 °C wird in die Vorlage 1 die Vorlage 2 eingespeist, danach dosiert man Zulauf 1 und Zulauf 2 innerhalb von 4 Stunden bei 65 °C zu. Anschließend läßt man 4 Stunden bei 65 °C auspolymerisieren (Latex IV.3).

Die Pfropfpolymer-Latices werden wie folgt weiterbehandelt :

| | | |
|---|---|---|
| Vorlage 3: | Wasser | 5525 Gew.-Teile |
| | $MgSO_4$ x $H_2O$ (Bittersalz) | 107 Gew.-Teile |
| Zulauf 3: | Latex IV.3 | B Gew.-Teile |
| Zulauf 4: | Methylmethacrylat | 156 Gew.-Teile |
| Aktivator: | Kaliumperoxidisulfat | 1,3 Gew.-Teile |
| | Wasser | 78 Gew.-Teile |

Unter gutem Rühren wird Vorlage 3 auf 70-73 °C aufgeheizt. Innerhalb von 1 Stunde dosiert man den Zulauf 3 hinzu. Dann fügt man den Zulauf 4 innerhalb von 30 Minuten hinzu und aktiviert anschließend mittels der Aktivator-Lösung. Man heizt auf 80 °C auf, rührt 2 Stunden, heizt auf 90 °C auf und rührt nochmals 2 Stunden. Nach anschließender Stabilisierung mit 2 Gew.-Teilen phenolischen Antioxidantien wird über Filtration, Waschung und Trocknung zu einem Pulver aufgearbeitet.

[1]) Definition des Quellungsindex : s. M. Hoffmann, H. Krömer, R. Kuhn, Polymeranalytik I und II, Georg Thieme Verlag, Stuttgart 1977

### Tabelle 3 : Herstellung der Pfropfprodukte

| Typ | A Gew.-Tle. | Latex IV. 2 | A Gew.-Tle. | Latex IV. 1 | B Gew.-Tle. | Latex IV. 3 |
|---|---|---|---|---|---|---|
| N | 3.286,4 | | | ./. | | 3.795 |
| O | | ./. | 3.474,3 | | | 4.011 |
| P | 1.643 | | 1.737 | | | 3.900 |

### Tabelle 4 : Zusammensetzung der Pfropfprodukte

| Typ | Polyacrylat-Ppfopfgundlage | | Pfropfhülle |
|---|---|---|---|
| | Latex IV. 1[1] Gew.-Teile | Latex IV. 2[1] Gew.-Teile | Methylmethacrylat Gew.-Teile |
| N | ./. | 70 | 30 |
| O | 70 | ./. | 30 |
| P | 35 | 35 | 30 |

[1]) bezogen auf Feststoff-Gehalt

Die Pfropfprodukte N, O und P enthalten ca. 12 Gew.-% nicht aufgepfropftes MMA-Harz mit einer Intrinsic-Viskosität (Staudinger-Index) $[\eta] = 0,3$ dl/g, gemessen in DMF bei 25 °C.

0 134 937

B. Herstellung und Prüfung der Formmassen

### Beispiele 1-24

Auf einem kontinuierlich arbeitenden Doppelwellenextruder wurden die Komponenten aufgeschmolzen und homogenisiert. Die Zylindertemperaturen wurden so gewählt, daß die in den Tabellen 5-7 angegebenen Massetemperaturen eingehalten wurden. Der Schmelzstrang wurde vor dem Austritt aus der Düse entgast, in Wasser abgekühlt, granuliert und getrocknet.

Von den Formmassen wurden auf einer Spritzgußmaschine Normkleinstäbe hergestellt. Geprüft wurde die Kerbschlagzähigkeit (nach DIN 53 453) bei den angegebenen Temperaturen.

### Beispiele 25-27

Analog den Versuchen 1-24 wurde das Pfropfpolymerisat mit geschmolzenem Polyamid auf dem Extruder gemischt. Anschließend wurden in die geschmolzene Mischung Schnittglasfasern von 6 mm Länge eindosiert und homogen verteilt.

Nach dem Entgasen der Schmelze vor der Düse, dem Austragen des Schmelzstranges in Wasser, Granulieren und Trocknen wurden Normkleinstäbe, wie vorher beschrieben, hergestellt. Geprüft wurden die Schlagzähigkeit und Kerbschlagzähigkeit bei verschiedenen Temperaturen (nach DIN 53 453). Ergebnisse siehe Tabelle 8.

(Siehe Tabellen Seite 12 ff.)

Tabelle 5

| Beispiel | Komponente | | | | Kerbschlagzähigkeit (kJ/m²) | | | |
|---|---|---|---|---|---|---|---|---|
| | I | | III | | | | | |
| | Polyamid | | Pfropfprodukt | | +20°C | -20°C | -30°C | -40°C |
| | Typ | Gew.-% | Typ | Gew.-% | | | | |
| 1[1] | PA-6 | 80 | A | 20 | ng. | 20 | | 10 |
| 2 | PA-6 | 80 | B | 20 | ng. | ng. | | 12 |
| 3[1] | PA-6 | 79 | C | 21 | ng. | 22 | | 12 |
| 4 | PA-6 | 79 | D | 21 | ng. | ng. | | 13 |
| 5[1] | PA-6 | 78 | E | 22 | ng. | 23* | 15* | 12 |
| 6[1] | PA-6 | 78 | F | 22 | 50 | 14 | 10 | 8 |
| 7 | PA-6 | 78 | G | 22 | ng. | ng. | ng. | 14 |
| 8 | PA-6 | 78 | H | 22 | ng. | ng. | ng. | 16 |
| 9 | PA-6 | 78 | I | 22 | ng. | ng. | ng. | 17 |
| 10 | PA-6 | 78 | J | 22 | ng. | ng. | ng. | 20 |
| 11 | PA-6 | 78 | K | 22 | ng. | ng. | ng. | 16 |
| 12 | PA-6 | 78 | L | 22 | ng. | ng. | ng. | 12 |
| 13 | PA-6 | 85 | J | 15 | ng. | | | 10 |
| 14 | PA-6 | 90 | J | 10 | 35 | | | 7 |
| 15 | PA-6 | 78 | E | 11 | ng. | ng. | ng. | 19 |
| | | | F | 11 | | | | |

Die Massetemperatur im Extruder betrug 280 °C, in der Spritzgußmaschine 260 °C , die Formtemperatur betrug 80 °C. Die Gewichtangaben beziehen sich auf Formmassen.

* Die Prüfstäbe wurden im Prüfversuch nur angebrochen
1) Vergleichsversuche

Tabelle 6

| Beispiel | Komponente | | | | Kerbschlagzähigkeit (kJ/m²) | | | |
| | II Polyamid | | III Pfropfprodukt | | +20°C | -20°C | -30°C | -40°C |
| | Typ | Gew.-% | Typ | Gew.-% | | | | |
|---|---|---|---|---|---|---|---|---|
| 16[1] | PA-66 | 78 | E | 22 | ng. | 20 | 15 | 10 |
| 17[1] | PA-66 | 78 | F | 22 | 45* | 14 | 10 | 6 |
| 18 | PA-66 | 78 | J | 22 | ng. | ng. | ng. | 15 |
| 19 | PA-66 | 85 | J | 15 | ng. | | | 8 |
| 20 | PA-66 | 90 | J | 10 | ng. | | | 6 |
| 21 | PA-66 | 78 | { E<br>F | { 11<br>11 | ng. | | | 14 |

Die Massentemperatur im Extruder betrug 280-290 °C, in der Spritzgußmaschine 270 °C ; die Formtemperatur betrug 80 °C.

Die Gewichtsangaben beziehen sich auf die Formmassen.

* Die Prüfstäbe wurden im Prüfversuch nur angebrochen

1) Vergleichsversuche

0 134 937

0 134 937

Tabelle 7

| Beispiel | Komponente | | | | Kerbschlagzähigkeit (kJ/m$^2$) | |
|---|---|---|---|---|---|---|
| | I | | IV | | $\pm$ 20°C | −20°C |
| | Polyamid | | Pfropfprodukt | | | |
| | Typ | Gew.-% | Typ | Gew.-% | | |
| 22[1] | PA-6 | 78 | N | 22 | ng. | 10 |
| 23[1] | PA-6 | 78 | O | 22 | 20 | 4 |
| 24 | PA-6 | 78 | P | 22 | ng. | 15 |

Die Massetemperatur im Extruder betrug 280 °C, in der Spritzgußmaschine 270 °C, die Formtemperatur betrug 80 °C. Die Gewichtangaben beziehen sich auf die Formmassen.

1) Vergleichsversuche

Tabelle 8

| Bei-spiel | Komponente | | | | | Schlagzähigkeit kJ/m² | | Kerbschlag-zähigkeit kJ/m² | |
|---|---|---|---|---|---|---|---|---|---|
| | I Polyamid | | IV Pfropfprodukt | | Glasfaser | | | | |
| | Typ | Gew.-% | Typ | Gew.-% | Gew.-% | 20°C | -20°C | 20°C | -20°C |
| 25[1] | PA-6 | 60 | N | 10 | 30 | 55 | 50 | 18 | 15 |
| 26[1] | PA-6 | 60 | O | 10 | 30 | 45 | 40 | 14 | 12 |
| 27 | PA-6 | 60 | P | 10 | 30 | ng. | ng. | ng. | ng. |

Die Massetemperatur im Extruder betrug 280 °C, in der Spritzgußmaschine 270 °C ; die Formtemperatur betrug 80 °C. Die Gewichtsangaben beziehen sich auf die Formmassen.

1) Vergleichsversuche

**0 134 937**

## Patentansprüche

1. Thermoplastische Formmassen aus
A. 65 bis 97 Gew.-% (bezogen auf A + B) Polyamid
B. 3 bis 35 Gew.-% (bezogen auf A + B) Pfropfprodukt
von wenigstens einem Vinylmonomeren aus der Reihe Styrol, Acrylnitril, Methylmethacrylat auf teilchenförmige, wenigstens partiell vernetzte Dienkautschuke und/oder Alkylacrylatkautschuke mit mittleren Kautschukteilchendurchmessern von 0,05 bis 1 μm und mit einem Kautschukgehalt der Pfropfprodukte von 60 bis 85 Gew.-%,
dadurch gekennzeichnet, daß dem Pfropfprodukt B folgende Kautschuke zugrundeliegen :
a. 20 bis 80 Gew.-% (bezogen auf die Summe a + b) eines Kautschuk in Latex-form mit einem Teilchendurchmesser $d_{50}$ von 0,05 bis 0,19 μm und
b. 80 bis 20 Gew.-% (bezogen auf die Summe a + b) eines Kautschuk in Latex-form mit einem Teilchendurchmesser $d_{50}$ von 0,2 bis 1,0 μm
mit der Maßgabe, daß
1) $d_{50}$ (b) um den Faktor 1,5 bis 8 größer ist als $d_{50}$ (a),
2) der Quotient $Q = (d_{90}\text{-}d_{10})/d_{50}$ der einzelnen Kautschuke jeweils höchstens 2 und
3) die Differenz $d_{10}$ (b) — $d_{90}$ (a) 0,01 bis — 0,10 betragen.

2. Thermoplastische Formmassen nach Anspruch 1, dadurch gekennzeichnet, daß das Pfropfprodukt B durch Vermischen eines Kautschuklatex entsprechend a) und eines Kautschuklatex entsprechend b) und nachfolgender Pfropfpolymerisation der Vinylmonomeren hergestellt worden ist.

3. Thermoplastische Formmassen nach Anspruch 1, dadurch gekennzeichnet, daß das Pfropfprodukt B durch Pfropfpolymerisation des Vinylmonomeren auf einen Kautschuklatex entsprechend
a) und getrennte Pfropfpolymerisation der Vinylmonomeren auf einen Kautschuklatex entsprechend
b) und anschließendes Vermischen der so erhaltenen Pfropfprodukte hergestellt worden ist.

4. Thermoplastische Formmassen nach Anspruch 1, dadurch gekennzeichnet, daß die Dienkautschuke bzw. die Alkylacrylatkautschuke einen Gelgehalt von ≥ 80 Gew.-% aufweisen.

5. Thermoplastische Formmassen nach Anspruch 1, dadurch gekennzeichnet, daß die Alkylacrylatkautschuke mit Triallylcyanurat oder Triallylisocyanurat vernetzt sind.

6. Thermoplastische Formmassen nach Anspruch 1, dadurch gekennzeichnet, daß die Alkylacrylatkautschuke einen Polybutadienkern enthalten.

7. Thermoplastische Formmassen nach Anspruch 1, dadurch gekennzeichnet, daß die Pfropfprodukte B durch gemeinsame Pfropfung von feinteiligen und grobteiligen Kautschukteilchen erhalten wurden.

8. Thermoplastische Formmassen nach Anspruch 1, dadurch gekennzeichnet, daß die Formmassen freies (Co) polymerisatharz der Pfropfmonomeren in einer Menge von höchstens 15 Gew.-%, bezogen auf Formmasse A + B, und einen Staudinger-Index [η] ≥ 0,6 dl/g, gemessen in Dimethylformamid bei 25 °C, enthalten.

9. Thermoplastische Formmassen nach Anspruch 1, dadurch gekennzeichnet, daß die Formmassen bis zu 60 Gew.-% Glasfasern enthalten.

10. Thermoplastische Formmassen nach Anspruch 1, dadurch gekennzeichnet, daß als Polyamid Polyamid-6, Polyamid-66 oder entsprechende Copolyamide verwendet werden.

## Claims

1. Thermoplastic moulding compositions consisting of
A. 65 to 97 % by weight (based on A + B) of a polyamide and
B. 3 to 35 % by weight (based on A + b) of a graft product
of a least one vinyl monomer from the series comprising styrene, acrylonitrile and methyl methacrylate on particulate, at least partially crosslinked diene rubbers and/or alkyl acrylate rubbers with average rubber particle diameters of 0.05 to 1 μm and with a rubber content of the graft products of 60 to 85 % by weight, characterised in that graft product B is based on the following rubbers :
a. 20 to 80 % by weight (based on the sum of a + b) of a rubber in latex form with a particle diameter $d_{50}$ of 0.05 to 0.19 μm and
b. 80 to 20 % by weight (based on the sum of a + b) of a rubber in latex form with a particle diameter $d_{50}$ of 0.2 to 1.0 μm,
with the proviso that
1) $d_{50}$ (b) is larger than $d_{50}$ (a) by a factor of 1.5 to 8,
2) the quotient $Q = (d_{90}\text{-}d_{10})/d_{50}$ of the individual rubbers is in each case at most 2 and
3) the difference $d_{10}$ (b) — $d_{90}$ (a) is 0.01 to 0.10.

2. Thermoplastic moulding compositions according to Claim 1, characterised in that the graft product B has been produced by mixing a rubber latex according to a) and a rubber laxtex according to b) and subsequently graft polymerising the vinyl monomers.

3. Thermoplastic moulding compositions according to Claim 1, characterised in that the graft

16

# 0 134 937

product B has been produced by graft polymerising the vinyl monomers on to a rubber latex according to a) and separately graft polymerising the vinyl monomers on to a rubber latex according to b) and subsequently mixing the graft products thus obtained.

4. Thermoplastic moulding compositions according to Claim 1, characterised in that the diene rubbers or the alkyl acrylate rubbers have a gel content of $\geq$ 80 % by weight.

5. Thermoplastic moulding compositions according to Claim 1, characterised in that the alkyl acrylate rubbers are crosslinked with triallyl cyanurate or triallyl isocyanurate.

6. Thermoplastic moulding compositions according to Claim 1, characterised in that the alkyl acrylate rubbers contain a polybutadiene core.

7. Thermoplastic moulding compositions according to Claim 1, characterised in that the graft products B have been obtained by jointly grafting finely divided and coarsely divided rubber particles.

8. Thermoplastic moulding compositions according to Claim 1, characterised in that the moulding compositions contain free (co)polymer resin of the graft monomers in a quantity of at most 15 % by weight, based on the moulding composition A + B, and a Staudinger index $[\eta]$ of $\leq$ 0.6 dl/g, measured in dimethyl formamide at 25 °C.

9. Thermoplastic moulding compositions according to Claim 1, characterised in that the moulding compositions contain up to 60 % by weight of glass fibres.

10. Thermoplastic moulding compositions according to Claim 1, characterised in that polyamide 6, polyamide 66 or corresponding copolyamides are used as the polyamide.

## Revendications

1. Mélanges à mouler thermoplastiques constitués de

A. 65 à 97 % en poids (par rapport à A + B) de polyamide

B. 3 à 35 % en poids (par rapport à A + B) de produit greffé

d'au moins un monomère vinylique de la série styrène, acrylonitrile, méthacrylate de méthyle, sur des caoutchoucs diéniques et/ou des caoutchoucs d'acrylate d'alkyle au moins partiellement réticulés, en particules, présentant des diamètres moyens de particules de caoutchouc de 0,05 à 1 μm et avec une teneur en caoutchouc des produits greffés de 60 à 85 % en poids, caractérisés en ce que le produit greffé B est à base des caoutchoucs suivants :

a. 20 à 80 % en poids (par rapport à la somme de a + b) d'un caoutchouc sous forme de latex de diamètre $d_{50}$ de particules de 0,05 à 0,19 μm et

b. 80 à 20 % en poids (par rapport à la somme a + b) d'un caoutchouc sous forme de latex ayant un diamètre $d_{50}$ de particules de 0,2 à 1,0 μm

sous réserve que

1) $d_{50}$ (b) soit supérieur à $d_{50}$ (a) d'un facteur 1,5 à 8

2) le quotient $Q = (d_{90}\text{-}d_{10})/d_{50}$ des caoutchoucs individuels soit dans chaque cas au maximum égal à 2 et

3) la différence $d_{10}$ (b) — $d_{90}$ (a) ait une valeur de 0,01 à —0,10.

2. Mélanges à mouler thermoplastiques suivant la revendication 1, caractérisés en ce que le produit greffé B a été produit par mélange d'un latex de caoutchouc correspondant à a) et d'un latex de caoutchouc correspondant à b), puis polymérisation de greffage des monomères vinyliques.

3. Mélanges à mouler thermoplastiques suivant la revendication 1, caractérisés en ce que le produit greffé B a été obtenu par polymérisation de greffage des monomères vinyliques sur un latex de caoutchouc correspondant à a) et polymérisation séparée de greffage des monomères vinyliques sur un latex de caoutchouc correspondant à b), puis mélange des produits greffés ainsi obtenus.

4. Mélanges à mouler thermoplastiques suivant la revendication 1, caractérisés en ce que les caoutchoucs diéniques et les caoutchoucs d'acrylate d'alkyle ont une teneur en gel supérieure ou égale à 80 % en poids.

5. Mélanges à mouler thermoplastiques suivant la revendication 1, caractérisés en ce que les caoutchoucs d'acrylate d'alkyle sont réticulés avec du cyanurate de triallyle ou de l'isocyanurate de triallyle.

6. Mélanges à mouler thermoplastiques suivant la revendication 1, caractérisés en ce que les caoutchoucs d'acrylate d'alkyle contiennent un noyau de polybutadiène.

7. Mélanges à mouler thermoplastiques suivant la revendication 1, caractérisés en ce que les produits greffés B ont été obtenus par greffage commun de particules fines et grossières de caoutchouc.

8. Mélanges à mouler thermoplastiques suivant la revendication 1, caractérisés en ce qu'ils contiennent une résine libre de produit de (co)polymérisation des monomères greffés en une quantité au maximum égale à 15 % en poids par rapport aux mélanges à mouler A + B et ont un indice de Staudinger $[\eta]$ inférieur ou égal à 0,6 dl/g, mesuré dans le diméthylformamide à 25 °C.

9. Mélanges à mouler thermoplastiques suivant la revendication 1, caractérisés en ce qu'ils contiennent jusqu'à 60 % en poids de fibres de verre.

10. Mélanges à mouler thermoplastiques suivant la revendication 1, caractérisés en ce qu'on utilise comme polyamide du polyamide-6, du polyamide-66 ou des copolyamides correspondants.

17